# EUROPÄISCHE PATENTSCHRIFT

(11) **EP 2 610 595 B1**
(45) Veröffentlichungstag und Bekanntmachung des Hinweises auf die Patenterteilung: **17.06.2020**
(21) Anmeldenummer: 11401683.5
(22) Anmeldetag: 30.12.2011
(51) Int. Cl.: G01G 7/02, G01G 21/24

(54) **Wägebrücke**
Weighbridge
Pont de pesage

(43) Veröffentlichungstag der Anmeldung: 03.07.2013
(73) Patentinhaber: WIPOTEC GmbH, 67657 Kaiserslautern (DE)
(72) Erfinder: Gottfriedsen, Jan, 67714 Waldfischbach-Burgalben (DE); Stellwagen, Tobias, 67659 Kaiserslautern (DE)
(74) Vertreter: Eder, Christian

(56) Entgegenhaltungen:
- CH-A5- 654 660
- DE-U1- 8 815 158
- JP-A- 2002 107 207

## Beschreibung

Die vorliegende Erfindung betrifft eine Wägebrücke, insbesondere für eine Präzisionswaage.

In der Technik der Präzisionswaagen werden zunehmend hohe messtechnische Auflösung und Präzision gefordert, während gleichzeitig auch immer größere Messbereiche von einer Waage erfasst werden sollen. So sollen Güter mit stark unterschiedlichen Gewichten und räumlichen Abmessungen im Durchlaufbetrieb bei mitunter sehr hohen Transportgeschwindigkeiten gewogen werden.

Für Präzisionswaagen sind monolithisch ausgeführte Wägezellen mit integrierten Hebelübersetzungen bekannt, welche nach dem Prinzip der elektrodynamischen Kraftkompensation arbeiten. Derartige Systeme mit einfacher Übersetzung sind derzeit nur bis zu einem Gewicht von ca. 30 kg einsetzbar. Für eine Messbereichserweiterung kann entweder ein stärkeres Magnetsystem mit den damit verbundenen hohen Kosten gewählt werden, oder das Übersetzungsverhältnis des Hebelwerks wird weiter erhöht. Bei Mehrfachübersetzungen sinkt jedoch die am letzten Übersetzungshebel abgreifbare Auflösung des Messsystems. Darüber hinaus ist die Herstellung von monolithischen Mehrfachübersetzungen technisch aufwendig und aufgrund des wenigen verfügbaren Bauraumes oft gar nicht möglich.

Aus der EP 50 708 B1 ist eine Wägebrücke bekannt, bei der ein Oberrahmen zur Aufnahme einer Last mit einem Hebelsystem gekoppelt ist, so dass eine Verschwenkung oder Verformung eines Hebelabschnitts über Dehnungsmessstreifen erfasst und ausgewertet werden kann. Der Oberrahmen greift über jeweils zwei Gelenke an einem gemeinsamen Hebel an und die Dehnungsmessstreifen im Sinne eines Kraftaufnehmers sind in der horizontalen Mitte der Waage angeordnet.

Auch aus der DE 69 516 860 T2 ist ein ähnlicher Mechanismus bekannt, der dort als Lastsensor bezeichnet wird. Auch hier sind zwei im Zentrum der Waage zu einem Kraftaufnehmer geführte Hebel jeweils nahezu über die ganze Breite des Lastsensors ausgebildet, wodurch wertvoller Bauraum im Inneren der Waage bzw. des Lastsensors konstruktiv blockiert wird. Dadurch wird insbesondere auch der Platz für weitere Übersetzungsstufen reduziert oder ganz blockiert.

Andererseits dient die breite Ausführung der Hebel nach dem Stand der Technik zur Reduzierung der Ecklastempfindlichkeit dieser Waage und erlaubt eine kontrollierte Führung des Lastaufnehmers gegenüber einer ortsfesten Basiskomponente der Waagen.

Die DE 88 15 158 U1 beschreibt ein Wägesystem mit vier Einzelmechaniken, die von einer gemeinsamen Wägeplattform belastet sind. Eine auf allen vier Mechaniken gemeinsam aufliegende Lastplattform kann im Fall ihrer Verformung die einzelnen Mechaniken unterschiedlich stark belasten. Unterhalb der Lastplattform sind die in den einzelnen Ecken erfassten Gewichtskräfte über einen Hebelmechanismus zusammengeführt und einer gemeinsamen Messzelle zugeleitet.

Aus der CH 654 660 A5 ist eine elektronische Brückenwaage bekannt, bei der zwei miteinander gekoppelte, U-förmige Hebel jeweils eine Last ins Zentrum der Waage leiten, wo die beiden Hebel miteinander zur Bildung einer Summenkraft gekoppelt sind.

In der JP 2002 107207 A wird ein Lastmessmechanismus beschrieben, bei dem zur Vermeidung von unerwünschten Horizontalkräften an einem Lastaufnehmer kugelgelagerte Ausgleichselemente zwischen den Lastaufnehmer und ein die Last tragendes Fördersystem eingesetzt sind, so dass vom Fördersystem erzeugte horizontale Kräfte nicht auf den Lastaufnehmer übertragen werden.

Aufgabe der Erfindung war es daher, Mittel für eine Präzisionswaage mit hoher Tragkraft bereit zu stellen, um Wiegegüter bei hoher Auflösung und messtechnischer Präzision und bei zugleich geringer Ecklast- und Momentenempfindlichkeit in besonders kompakter Bauart anzubieten.

Die Aufgabe wird gelöst mit einer Wägebrücke nach Anspruch 1 und durch eine Waage nach Anspruch 11.

Die Erfindung geht von der Erkenntnis aus, dass durch Aufteilung der zu erfassenden gesamten Gewichtskraft auf mehrere separate Hebel die aufzunehmende Last je Hebel reduziert werden kann, um die Beanspruchung einzelner Hebelwerke zu reduzieren. Die zunächst separat untersetzten Kräfte werden auf einer konstruktiv vorgebbaren Untersetzungsstufe, in der die Kräfte geringer sind, dann wieder zusammengeführt und zur Auswertung einem geeigneten Kraftaufnehmer zugeführt (Die Begriffe "Übersetzen" oder "Untersetzen" sind im Sinne einer gezielten Veränderung einer Hebelkraft abhängig von den jeweiligen Hebelarmen zu verstehen, wobei beide Begriffe sowohl eine Verstärkung als auch einer Reduzierung bedeuten können).

Von besonderer Bedeutung für die Erfindung ist dabei eine schmale bzw. flache Bauart der Brückenelemente, von denen wenigstens zwei zur Ausbildung der erfindungsgemäßen Wägebrücke eingesetzt werden, die vorzugsweise parallel zueinander beabstandet sind und zugleich die äußeren Abmaße der Wägebrücke definieren können. In jedes dieser Brückenelemente wird eine Teilkraft der insgesamt zu erfassenden Last eingeleitet, wobei jedes dieser Brückenelemente die in es eingeleitete Teilkraft zunächst unabhängig von dem oder den anderen Brückenelementen untersetzt. Erst auf einer konstruktiv vorgebbaren, vorzugsweise der letzten, Untersetzungsstufe werden die Brückenelemente miteinander mechanisch gekoppelt, um einer aus der Kopplung insgesamt resultierende Kraft auszubilden, welche dann einem Kraftaufnehmer unmittelbar oder in weiter untersetzter Form zugeführt wird.

Die separate Untersetzung einzelner Teilkräfte in jeweils eigens dafür vorgesehenen kompakten bzw. schmalen Hebelwerken (Brückenelement) schafft große Freiräume in den Bereichen zwischen den Brückenelementen, die für andere Komponenten der Waage ausgenutzt werden können. Der freigehaltene Bauraum kann bspw. zur Aufnahme von Kalibrierauflagen und -gewichten, elektronischen Bauteilen, Vibrations- und Beschleunigungssensoren eines Motors eines Transportsystems, etc. genutzt werden.

Die besondere Ausbildung der in der Wägebrücke erfindungsgemäß zum Einsatz kommenden Brückenelemente gewährleistet dabei - anders als im Stand der Technik - die Einleitung der insgesamt zu messenden Gewichtskraft auf wenigstens vier separate Hebel, von denen jeweils zwei zu einem Brückenelement gehören. Die Untersetzung der in jedes Brückenelement eingeleiteten Teilkraft erfolgt dabei zunächst unabhängig von den anderen Brückenelementen. Da außerdem jedes Brückenelement mit seinen Hebeln auf einen möglichst begrenzten schmalen Abschnitt der Wägebrücke beschränkt ist, gibt es keine mehreren Brückenelementen gemeinsam zugehörigen Hebel auf der obersten Untersetzungsstufe, die sich unmittelbar an die Lasteinleitung anschließt. Stattdessen ist diese oberste Untersetzungsstufe in der Anzahl der eingesetzten Brückenelemente vorhanden, bei zwei Brückenelementen also doppelt.

Erst auf einem nachgeordneten und damit weniger belasteten Untersetzungsniveau sind die Brückenelemente miteinander gekoppelt, um die in jedem Brückenelement separat untersetzten Kräfte dann erst zusammenzuführen zu einer gemeinsamen, resultierenden und mit einem Kraftaufnehmer zu erfassenden Gesamtmesskraft. Die Brückenelemente bzw. deren Untersetzungsstufen sind vorzugsweise symmetrisch zu einer senkrechten X-Z-Mittelebene ausgeführt, welche eine Wägebrücke mit genau zwei Brückenelementen etwa mittig zwischen diesen aufteilt.

Durch die nachfolgend beschriebene besondere Hebelanordnung bzw. Hebelkopplung der Hebel innerhalb jedes Brückenelements ist eine präzise Führung der Lastaufnehmer jedes einzelnen Brückenelements gewährleistet. Miteinander verbundene Lastaufnehmer der Brückenelemente werden daher ebenfalls präzise geführt.

Insbesondere, aber nicht ausschließlich, das Prinzip der elektrodynamischen Kraftkompensation kommt für die Umsetzung der Gewichtskraft in eine elektrisch messbare Form in Frage, so dass der Kraftaufnehmer nach einem solchen Prinzip gestaltet sein kann.

Ein jedes der Brückenelemente der erfindungsgemäßen Wägebrücke enthält kraftübertragende Hebel, mit denen eine Gewichtskraft untersetzt und/oder zu einem Kraftaufnehmer der Wägebrücke weitergeleitet wird. Weiterhin umfasst jedes Brückenelement einen Basisabschnitt, der im Wesentlichen längliche Gestalt hat und sich in einer ersten horizontalen Längsrichtung X von einem Ende zum gegenüberliegenden anderen Ende erstreckt. In einer zur ersten Richtung senkrechten, ebenfalls horizontalen zweiten Richtung Y fällt der Basisabschnitt dagegen schmal aus. Oberhalb des Basisabschnitts ist ein Lastaufnehmer vorgesehen, der sich ähnlich im Raum erstreckt wie der Basisabschnitt und dabei in einer zur den beiden Richtung X und Y senkrechten dritten Richtung Z vertikal oberhalb des Basisabschnitts angeordnet ist. Mit den über Lagerstellen am Basisabschnitt abgestützten Hebeln soll eine in den Lastaufnehmer eingeleitete Kraft, die insbesondere eine Teilkraft einer auf eine Waage einwirkenden Gewichtskraft sein kann, untersetzt und dann zum Kraftaufnehmer weitergeleitet werden.

Dabei greift der Lastaufnehmer über einen ersten Angriffspunkt an einem ersten Hebel und über einen zweiten Angriffspunkt an einem separat zum ersten Hebel ausgebildeten zweiten Hebel an, so dass eine in den Lastaufnehmer eingeleitete Teilkraft zunächst auf diese beiden Hebel aufgeteilt wird und von dort in Richtung auf den Kraftaufnehmer übertragbar ist. Unter "Richtung" ist hier der Weg gemeint ist, dem Kräfte entlang physikalischer Komponenten des Brückenelements vom Lastaufnehmer zum Kraftaufnehmer folgen. Bei wenigstens zwei Brückenelementen der Wägebrücke wird die zu messende Gewichtskraft also zunächst in zwei (auch von einander verschiedene) Teilkräfte aufgeteilt, nämlich für jedes Brückenelement eine Teilkraft. Der Lastaufnehmer jedes Brückenelements teilt diese Teilkraft wiederum auf die beiden unmittelbar mit ihm gekoppelten ersten beiden Hebel auf, wobei auch diese Aufteilung ungleich erfolgen kann, je nach Lasteinleitungsposition der Teilkraft am Lastaufnehmer. Damit wird die ursprüngliche Gewichtskraft auf vier separat voneinander ausgebildete Hebel aufgeteilt. Bei paralleler Anordnung von bspw. zwei Brückenelementen für die Wägebrücke ergeben sich dadurch für die vier Hebel vier Lagerstellen, über welche die Gewichtskraft auf den Basisabschnitten abgestützt wird, was eine stabile und Ecklastunempfindliche Waage ermöglicht.

Die beiden Hebel jedes Brückenelements stützen sich jeweils über eine Lagerstelle am Basisabschnitt ab und sind nach einer Ausführungsform der Erfindung zur Bildung einer Summenkraft miteinander gekoppelt, um die Summenkraft je Brückenelement zu bilden und diese einem gemeinsamen Kraftaufnehmer zuzuleiten. Aus den beiden vom Lastaufnehmer in zwei verschiedene Hebel eingeleiteten Kräften wird dadurch vereinfachend eine einzige, zweckmäßigerweise untersetzte Summenkraft pro Brückenelement, welche im Brückenelement weitergeleitet werden kann und in unveränderter Größe oder auch weiter untersetzt schließlich mit einer analog gebildeten Summenkraft eines weiteren Brückenelements mechanisch überlagert werden soll.

Dabei ist es denkbar, die beiden zunächst mit Einzelkräften vom Lastaufnehmer belasteten Hebel jeweils mit weiteren, voneinander unabhängigen Hebeln zur Kraftuntersetzung oder Kraftübertragung zu verbinden, um die Kopplung der getrennten Hebelsysteme erst nach einer weiteren bzw. späteren Übersetzungsstufe vorzunehmen. Die miteinander zur Bildung einer Summenkraft gekoppelten Hebel bilden ein Hebelpaar.

Bei aus dem Stand der Technik bekannten monolithischen Wägezellen dient eine Parallellenkerkonstruktion dazu, den in vertikaler Richtung beweglichen Lastaufnehmer gegenüber einem ortsfesten Basisabschnitt definiert zu führen, während die Übertragung und Untersetzung der auf den Lastaufnehmer einwirkenden Gewichtskraft über eine zusätzlich am Lastaufnehmer angreifende Hebelkonstruktion ermöglicht wird. Zur Vermeidung dieses erhöhten konstruktiven Aufwandes sieht die Erfindung vor, dass der Lastaufnehmer relativ zum Basisabschnitt durch die beiden am Lastaufnehmer angreifenden ersten und zweiten Hebel entlang vertikaler Parallelen in Z-Richtung geführt wird. Die ersten beiden Hebel ersetzen also erfindungsgemäß die aus dem Stand der Technik bekannte und dort erforderliche Parallelführung und übertragen gleichzeitig die vom Lastaufnehmer zum Kraftaufnehmer zu führende Hauptlast. Ein solches Brückenelement verzichtet dabei vorteilhaft auf die Ausbildung einer separaten Parallelführung zusätzlich zu den kraftübertragenden Hebeln, und vereint stattdessen beide Funktionen in den Hebeln alleine. Dies reduziert nicht nur den Fertigungsaufwand sondern auch die Mindestabmaße des Brückenelements und unterstützt dabei die bevorzugte schmale und kompakte Bauweise der einzelnen Brückenelemente.

Zweckmäßigerweise greifen die an den Lastaufnehmer unmittelbar gekoppelten Hebel an einer gemeinsamen Kopplungsposition an einem Koppelglied an, um die Hebelkräfte dort zusammenzuführen und als Summenkraft weiterzuleiten. Durch diese Kopplung der ersten beiden Hebel an einer gemeinsamen Kopplungsposition und durch geeignete Wahl der Hebellängen erfährt der Lastaufnehmer die Parallelführung, die im Stand der Technik stets durch separat dafür vorgesehene Lenker gebildet wird.

Die Kopplung der beiden Hebel, mit der die jeweiligen Hebelkräfte zu einer gemeinsamen Summenkraft überlagert werden, erfolgt zweckmäßig an einem als Gelenk ausgeführten Abschnitt des Koppelglieds. Es kann sich dabei insbesondere um eine monolithisch gearbeitete Dünnstelle handeln, an welcher auf der einen Seite der Dünnstelle (bspw. mit in Y-Richtung hintereinander versetzt angeordneten Verbindungsabschnitten) die beiden separaten Hebel angreifen, während sich an der anderen Seite der dort nicht mehr aufgeteilten Dünnstelle das Koppelglied anschließt. Dieses kann dann als weiterer, die Summenkraft weiter untersetzender und unmittelbar an die Kopplungsstelle anschließender Hebel dienen. Auch die Ausbildung des Koppelglieds als ein mehrere Brückenelemente verbindendes Verbindungselement ist denkbar, wodurch dann die in jedem Brückenelement separat gebildeten Summenkräfte zu einer gemeinsamen Kraft zusammengeführt werden, um diese mit einem Kraftaufnehmer zu erfassen.

Die Kopplung kann auch durch Überlagerung der zu koppelnden Hebelenden in vertikaler Richtung und Ausbildung einer Dünnstelle zwischen ihnen realisiert werden, wobei zugleich eine Kopplung in diesem Bereich mit dem Koppelglied vorzusehen ist.

Nach einer vorteilhaften Ausführungsform der Erfindung sind alle Hebel jedes Brückenelements im Wesentlichen räumlich zwischen Lastaufnehmer und Basisabschnitt des Brückenelements angeordnet, vorzugsweise in vertikaler Z-Richtung übereinander. Das Brückenelement nimmt damit eine möglichst schmale bzw. längliche Gestalt an und eignet sich so insbesondere für die Anwendung in einer Wägebrücke, um die der Untersetzung dienenden Hebelwerke weitgehend auf einen schmalen Randbereich der Wägebrücke zu begrenzen. Dadurch, dass sich die kraftübertragenden Hebel bei einer Wägebrücke mit beispielsweise zwei Brückenelementen im Wesentlichen auf den Bereich der Brückenelemente selbst beschränken, bleibt der Bereich zwischen diesen Brückenelementen vorteilhaft frei als Bauraum für einen Kraftaufnehmer oder für andere Waagenkomponenten, wie beispielsweise für eine Transportvorrichtung bzw. deren Motor. Der freigehaltene Bauraum kann darüber hinaus auch zur Aufnahme von Kalibierauflagen und -gewichten, elektronischen Bauteilen, Vibrations- und Beschleunigungssensoren etc. genutzt werden.

Eine besonders zweckmäßige Ausführungsform der Wägebrücke sieht weiterhin vor, dass der erste und der zweite, jeweils unmittelbar an dem Lastaufnehmer angekoppelte Hebel bei vertikaler Belastung des Lastaufnehmers in zueinander entgegengesetzte Drehrichtungen verschwenken. Dies gestattet den im Wesentlichen symmetrischen Aufbau des Brückenelements und die Bildung der vorgenannten Summenkraft etwa im horizontalen Zentrum des Brückenelements. Bei einer symmetrischen Führung der beiden am Lastaufnehmer angreifenden Hebel wird sich der eine Hebel bei vertikaler Belastung des Lastaufnehmers entgegengesetzt zum zweiten Hebel drehen. Bei einem Brückenelement, bei dem diese beiden Hebel jeweils als zweiarmige Hebel ausgeführt und in X-Richtung hintereinanderliegend angeordnet sind, bewegen sich dann die beiden jeweils nicht beaufschlagten anderen Hebelarme in die gleiche Richtung, was deren Kopplung zur Bildung der vorgenannten Summenkraft vereinfacht. Gerade diese Anordnung gestattet auch - wie in den Figuren zu sehen sein wird - die besonders einfache Parallelführung des Lastaufnehmers.

Eine solchermaßen gebildete Wägebrücke koppelt dabei innerhalb eines Brückenelements zwei gegenläufig zueinander verschenkende Hebel zur Ausbildung einer Summenkraft, wobei dies in gleiche Weise auch für die weiteren Brückenelemente der Wägebrücke gilt. In jedem Brückenelement werden dann zwei gegenläufig zueinander verschwenkende Hebel aneinandergekoppelt, um durch die Kopplung - separat für jedes Brückenelement - jeweils eine Summenkraft auszubilden. Anders als beim Stand der Technik, wo jeweils gleichlaufende Hebel durch eine Quertraverse miteinander verbunden sind, erfolgt bei der erfindungsgemäßen Wägebrücke die Kopplung gegenläufiger Hebel, und zwar separat für jedes Brückenelement. Erst die durch die Kopplung gebildeten einzelnen Summenkräfte jedes Brückenelements können dann - gegebenenfalls in weiter untersetzter Form - durch ein die einzelnen Brückenelemente miteinander verbindendes Verbindungselement überlagert werden zur Ausbildung einer einzigen, aus mehreren separat gebildeten Summenkräften entstehenden Gesamtmesskraft.

Die erfindungsgemäße Wägebrücke umfasst mehrere Brückenelemente und eignet sich so vorteilhaft zur Konstruktion von hochauflösenden und genauen Präzisionswaagen, insbesondere gravimetrischen Waagen. Eine solche Waage umfasst wenigstens zwei der vorbeschriebenen Brückenelemente, deren Lastaufnehmer jeweils eine Teilkraft der insgesamt zu messenden Gewichtskraft aufnehmen sollen. Die Belastung der beiden Brückenelemente kann etwa mittels einer auf beiden Lastaufnehmern ruhenden Waagschale erfolgen. Zweckmäßigerweise liegen die Brückenelemente dabei parallel zueinander in einem Abstand, der beispielsweise in etwa der Längsausdehnung eines Brückenelements entspricht. Die in jedem einzelnen Brückenelement gebildeten Summenkräfte werden in der Waage gemeinsam in ein Verbindungselement eingeleitet, welches wenigstens zwei Brückenelementen gleichzeitig dient, um die resultierende Kraft dem Kraftaufnehmer zuzuführen oder sie zuvor noch weiter zu untersetzen.

Bei der Ausführungsform mit genau zwei gegenüberliegenden Brückenelementen könnte sich das an den Koppelgliedern oder nachgeschalteten Hebeln jedes Brückenelements angreifende Verbindungselement vom einen Brückenelement beispielsweise rechtwinklig in Y-Richtung bis zum anderen Brückenelement hinübererstrecken, wobei jedes Brückenelement seine jeweils gebildete Summenkraft in das Verbindungselement einleitet. An einer vorgebbaren Position entlang des Verbindungselements, auch nahe bei oder innerhalb eines der beiden Brückenelemente, kann die resultierende Gesamtkraft dann abgegriffen, weitergeleitet, untersetzt oder mittels Kraftaufnehmer, z.B. nach dem Prinzip der Kraftkompensation ausgeglichen werden.

Eine derartige Waage ermöglicht es vorteilhaft, die insgesamt zu messende Gewichtskraft aufzuteilen auf mehrere, insbesondere zwei Brückenelemente, wobei jedes Brückenelement seinerseits - wie zuvor beschrieben - die jeweils eingeleitete Teilkraft wiederum in zwei getrennt voneinander ausgebildete und zueinander gegenläufig verschwenkende Hebel einleitet, so dass sich die Gesamtkraft zunächst auf vier Teilkräfte aufteilt. Die Belastung der Hebelwerke in den Brückenelementen wird dadurch weiter reduziert bzw. die maximal erfassbare Last erhöht. Da jeder Hebel bei monolithischer Bauweise über eine Dünnstelle an den Lastaufnehmer gekoppelt ist wird die Gesamtlast bei einer Wägebrücke mit zwei Brückenelementen bereits über vier Dünnstellen verteilt und in die jeweils separaten Hebel eingeleitet.

Die beiden von jedem Lastaufnehmer eines Brückenelements unmittelbar beaufschlagten Hebel sind getrennt bzw. separat voneinander ausgebildet. Unter "getrennt" ist dabei die physikalisch selbständige Ausbildung der Hebel gemeint, so dass jedem Hebel eine eigene Stützstelle als Hebeldrehpunkt, eigene Hebelarme und eigene Kraftangriffspunkte zukommen und der Hebel physikalisch identifizierbar und von einem weiteren Hebel unterscheidbar ist. "Getrennt" schließt jedoch nicht aus, dass der Hebel im Bereich eines Kraftangriffspunktes mit einem anderen Hebel oder mit einem anderen Abschnitt des Brückenelements (auch monolithisch) gekoppelt ist, was vorzugsweise gelenkig über eine flexible Dünnstelle erfolgt.

Die in die beiden Brückenelemente eingeleiteten Teilkräfte können theoretisch jeweils identisch sein, werden in der Praxis jedoch bei asymmetrischer Gewichtsauflage unterschiedliche Werte annehmen und nur in der Summe der Gesamtlast entsprechen. Die Bildung der Summenkräfte in den beiden Brückenelementen und deren gemeinsame Einleitung in das Verbindungselement führen jedoch im Ergebnis zu einem Messwert, der der Gesamtlast - zweckmäßigerweise in untersetzter Form - wieder entspricht.

Bei der erfindungsgemäßen Waage zeigt sich der besondere Vorteil der Ecklastunempfindlichkeit, die mit den Brückenelementen erreicht werden kann. Wird die Waage so gestaltet, dass die zu messende Last in der vertikalen Draufsicht innerhalb der von den beiden gegenüberliegenden Lastaufnehmern umschriebenen Fläche aufgelegt wird, so wird die Waage weitgehend frei von in X-Richtung oder in Y-Richtung wirkenden Momenten belastet. Anders dagegen kommt es beim Stand der Technik mit einem zentralen Lastaufnehmer zu Torsionsbelastungen durch Gewichtskräfte, welche in horizontaler Richtung versetzt zum Lastaufnehmer in eine mit diesem verbundene Lastschale eingebracht werden. Dies geht zu Lasten der Genauigkeit und der Stabilität der herkömmlichen Waagen. Bei der erfindungsgemäßen Waage dagegen spannen die Lastaufnehmer der einzelnen Brückenelemente gemeinsam eine ideelle Auflagefläche auf, deren Belastung durch eine Gewichtskraft zu minimaler Ecklastempfindlichkeit führt, da die eingebrachte Kraft über die an den äußeren Eckpunkten der gedachten Fläche angeordneten Enden der Lastaufnehmer aufgenommen wird.

Obwohl es denkbar ist, den Kraftaufnehmer der Waage in einem der beiden Brückenelemente anzuordnen, sieht eine vorteilhafte Ausführungsform der Erfindung vor, dass der Kraftaufnehmer zwischen den Brückenelementen der Waage angeordnet wird, um beispielsweise möglichst symmetrische Belastungsbedingungen zu erreichen und/oder den zwischen den Brückenelementen bestehenden Bauraum zu nutzen. In diesem Fall könnte das die beiden Brückenelemente verbindende Verbindungselement etwa mittig zwischen den beiden Brückenelementen eine Komponente eines Kraftaufnehmers bzw. Kraftkompensationssystems (insbesondere Spule oder Magnet) tragen, um eine Auslenkung des Verbindungselements in Abhängigkeit von der auf der Waage aufliegenden Gesamtlast zu kompensieren. Mit Ausnahme des Verbindungselements und des Kraftaufnehmers bleibt bei dieser Waage der zwischen den Brückenelementen ausgebildete Zwischenraum vorteilhaft frei von kraftübertragenden bzw. kraftübersetzenden Hebeln, da sich diese erfindungsgemäß möglichst innerhalb der Brückenelemente befinden.

Eine vorteilhafte Ausführungsform der Erfindung sieht vor, dass das Verbindungselement, mit welchem zwei Brückenelemente zur Zusammenführung ihrer Summenkräfte verbunden werden, zugleich das Koppelglied in jedem dieser beiden Brückenelemente darstellt. In diesem Fall werden die in jedem Brückenelement zunächst getrennt aufgenommenen Teilkräfte an dem Koppelglied zusammengeführt, welches als Verbindungelement zugleich auch Koppelglied des anderen Brückenelements darstellt und beide Brückenelemente mechanisch miteinander verbindet.

Somit werden bei zwei Brückenelementen vier Teilkräfte (pro Brückenelement überträgt der Lastaufnehmer auf zwei Hebel) zu zwei Summenkräften (durch Kopplung der getrennten Hebel zu einer Summenkraft pro Brückenelement) und dann zu einer resultierenden Gesamtkraft (die beiden Summenkräfte werden in ein gemeinsames Verbindungselement eingeleitet) zusammenführt, wobei die Summenkräfte und damit die resultierende Kraft durch die Hebelanordnung innerhalb der einzelnen Brückenelemente bereits eine untersetzte Form der in die Lastaufnehmer jeweils eingeleiteten Teilkräfte darstellt. Die gemeinsame Ausbildung von Verbindungselement und Koppelglied reduziert den konstruktiven Aufwand weiterhin und vereinfacht damit den Aufbau der Waage. Es liegt dabei im Belieben des Konstrukteurs, ob die am Verbindungselement zusammengeführten Summenkräfte als eine resultierende Kraft noch weiter untersetzt werden soll, bevor sie dem Kraftaufnehmer zugeführt wird.

Eine besonders vorteilhafte Ausführungsform der Erfindung sieht vor, dass die gesamte Wägebrücke monolithisch ausgebildet ist, so dass die wenigstens zwei Brückenelemente einstückig miteinander ausgebildet und deren Hebelwerke zugleich zueinander beabstandet sind. Eine solche monolithische Wägebrücke umfasst vorzugsweise wenigstens zwei Brückenelemente, einen Oberrahmen, einen Unterrahmen, die Hebel der Brückenelemente und ein Koppelglied bzw. Verbindungsglied.

Die Lastaufnehmer und Basisabschnitte jedes Brückenelements sind dann einstückig als beiden Brückenelementen gemeinsam dienender Oberrahmen bzw. Unterrahmen ausgeführt. Auch ein die beiden Brückenelemente miteinander verbindendes Verbindungselement zur Zusammenführung der jeweiligen Summenkräfte kann erfindungsgemäß monolithisch gemeinsam mit den Brückenelementen bzw. Oberrahmen und Unterrahmen ausgebildet sein. Die bekannten Vorteile der monolithischen Bauweise (insbesondere Vermeidung von Wärmespannungen) lassen sich daher auch für die erfindungsgemäße Wägebrücke erzielen. Diese Möglichkeit besteht bei den aus dem Stand der Technik bekannten Wägebrücken nicht oder ist nur sehr schwierig zu realisieren, da dort der Innenraum der Wägebrücke von den die einzelnen Hebel miteinander quer verbindenen Querstreben verbaut ist und so die seitliche ebenso wie die senkrechte Bearbeitung für eine monolithische Bauweise erschwert oder unmöglich gemacht wird. Durch die erfindungsgemäße Verlagerung der wesentlichen Übersetzungsfunktion in die in den Randbereichen der Wägebrücke angeordneten Brückenelemente bleibt der Innenraum dagegen weitgehend frei und bietet ungehinderten Zugang für Fräs- und Schneidewerkzeuge an allen Oberflächen, so dass die Wägebrücke monolithisch gefertigt werden kann.

Von Bedeutung ist auch eine Ausführungsform, bei der das Koppelglied zugleich Verbindungselement ist und zusätzlich noch als Hebel dient, welcher die aus allen Brückenelementen zusammengeführten Summenkräfte weiter untersetzt. Das Verbindungselement kann sich dabei quer zu den Brückenelementen erstrecken und beispielsweise mittig auf dieser Verbindung einen rechtwinklig abragenden Hebelabschnitt aufweisen, an dessen Ende eine Komponente eines elektromagnetischen Kraftkompensationssystems angeordnet ist. Die durch das Verbindungselement zusammengeführten Summenkräfte werden dann durch diesen Hebelabschnitt nochmals untersetzt auf eine am freien Ende des Hebelabschnitts zum Beispiel von einer Spule zu kompensierenden Größe.

Grundsätzlich kann die erfindungsgemäße Waage auch mehr als zwei Brückenelemente umfassen, die im Wesentlichen beliebig zueinander angeordnet sein können. Vorzugsweise liegen die Lastaufnehmer aller Brückenelemente dabei in einer Ebene. Die Brückenelemente können in der Draufsicht ein Dreieck oder sonstiges Polygon darstellen. Auch können mehrere Brückenelemente (vorzugsweise in horizontaler Y-Richtung) nebeneinander angeordnet werden. Durch die Anzahl der eingesetzten Brückenelemente reduziert sich die in jeden Lastaufnehmer eingeleitete Teilkraft, was die zulässige Höchstlast der Waage erhöht. Bei mehr als zwei verwendeten Brückenelementen kann die Waage so ausgebildet sein, dass Brückenelemente paarweise über Verbindungselemente miteinander verbunden sind, um die Summenkraft jeweils zweier Brückenelemente zu koppeln. Diese Verbindungselemente können dann über weitere Verbindungselemente miteinander verbunden bzw. gekoppelt werden, um so nach und nach die Summenkräfte aller Brückenelemente zu einer resultierenden Kraft zusammenzufassen. Theoretisch ist jedoch auch denkbar, ein erstes und einziges, alle Brückenelemente übergreifend bedienendes Verbindungselement zu schaffen, welches alle Summenkräfte der Brückenelemente gleichzeitig aufnimmt. Hier sind je nach räumlichen Gegebenheiten und Untersetzungserfordernissen unterschiedlichste Kombinationen denkbar, um die einzelnen Brückenelemente miteinander zu koppeln und deren Kräfte schließlich in einer resultierenden Kraft einem Kraftaufnehmer zuzuführen. Zweckmäßigerweise sind die Lastaufnehmer der einzelnen Brückenelemente einer erfindungsgemäßen Waage zur Ausbildung eines gemeinsamen, als Lastaufnehmer dienenden und vorzugsweise starr ausgebildeten Oberrahmens einstückig miteinander verbunden. Dadurch entsteht ein die Brückenelemente miteinander koppelnder Oberrahmen, der die Lastverteilung einer in ihn eingebrachten Gewichtskraft auf einzelne Teilkräfte in alle Lastaufnehmer sicherstellt. Bevorzugt verbindet der Oberrahmen die einzelnen Lastaufnehmer im Bereich ihrer jeweiligen Enden, so dass bei einer Ausführungsform mit zwei einander gegenüber liegenden Brückenelementen ein etwa rechteckiger Oberrahmen als gemeinsamer Lastaufnehmer entsteht. Die Rahmenkonstruktion, bei der die Lastaufnehmer an ihren Enden miteinander verbunden werden, lässt den Innenraum zwischen den Lastaufnehmern frei bzw. von oben frei zugänglich, so dass Bearbeitungsraum für die Herstellung der monolithischen Brückenelemente zugänglich oder auch Bauraum zur Unterbringung anderer Komponenten einer Waage verfügbar bleibt.

Obwohl die einzelnen Lastaufnehmer für einen gemeinsamen Oberrahmen grundsätzlich auch durch geeignete Verbindungsmittel miteinander lösbar verbunden werden können, sieht eine besonders vorteilhafte Ausführungsform die einstückige bzw. monolithische Ausbildung des gemeinsamen Oberrahmens vor. Dabei sind die Lastaufnehmer der Brückenelemente gemeinsam aus einem Stück gefertigt und miteinander zu einem gemeinsamem Oberrahmen verbunden. Die monolithische Ausbildung des Oberrahmens, wie auch der Brückenelemente, vermeidet materialabhängige Wärmespannungen, die bei unterschiedlichen Materialpaarungen das Wägeergebnis ungünstig beeinflussen.

Durch die Ausbildung des gemeinsamen Oberrahmens erhält die Waage eine zusätzliche Stabilität. Zweckmäßigerweise umläuft der Rahmen die zuvor beschriebene gedachte Fläche, innerhalb derer die zu messende Gewichtskraft von oben einzubringen wäre, um die Waage möglichst unempfindlich gegen Ecklasten auszubilden. Eine auf den Rahmen aufzusetzende oder aufzuschraubende Waagschale erstreckt sich dabei zweckmäßigerweise in horizontaler Richtung nicht über die Außenabmessungen des Oberrahmens hinaus, so dass unabhängig vom Angriffspunkt der Gewichtskraft an der Waagschale alle Lastaufnehmer (gegebenenfalls unterschiedliche) Teilkräfte als Druckkräfte, nicht aber als Zugkräfte erfahren. Durch die gemeinsame Ausbildung oder Verbindung der einzelnen Lastaufnehmer entsteht ein gemeinsamer Oberrahmen als Gesamtlastaufnehmer, dessen Parallelführung in Bereich jeden Brückenelements durch die Hebelanordnung des jeweiligen Brückenelements gewährleistet ist.

Ergänzend zur gemeinsamen bzw. monolithischen Ausbildung des alle Brückenelemente betreffenden Oberrahmens können auch die Basisabschnitte der einzelnen Brückenelemente zu einem gemeinsamen, vorzugsweise monolithischen Unterrahmen zusammengeführt werden. Dies erhöht die Stabilität der Waage zusätzlich, wobei auch der Unterrahmen die einzelnen Basisabschnitte vorzugsweise im Bereich ihrer Enden miteinander verbindet, analog zum Lastaufnehmer. Der vom Unterrahmen umlaufene Innenraum kann dabei ebenfalls frei zugänglich bleiben zur Schaffung von Bauraum oder auch für die Bearbeitung als Monolith.

Nach einer weiteren vorteilhaften Ausführungsform der erfindungsgemäßen Waage sind Anschraubpunkte an den Lastaufnehmern der Brückenelemente vorgesehen, um dort die dem jeweiligen ersten oder zweiten Hebel eines jeden Brückenelements zuzuführenden Kräfte als Teilkraft in den Lastaufnehmer einzuleiten. Eine Lastplatte oder Waagschale zur Aufnahme des zu wiegenden Gutes kann an diesen Anschraubpunkten befestigt werden. Um sicherzustellen, dass jedes Brückenelement Teilkräfte im Bereich der jeweiligen Enden der Lastaufnehmer erfährt (und nicht etwa nur über eine Krafteinleitung in der Mitte des Lastaufnehmers) sind die Anschraubpunkte im Bereich der beiden Enden jedes Lastaufnehmers angeordnet, wobei der horizontale Abstand eines Anschraubpunktes zum zugehörigen Angriffspunkt des ersten bzw. zweiten Hebels vorzugsweise kleiner ist als der Abstand zweier Anschraubpunkte desselben Brückenelements zueinander. Ein erster Anschraubpunkt eines Lastaufnehmers liegt also näher an dem Angriffspunkt, über den die Kraft vom Lastaufnehmer in den zugehörigen ersten Hebel einleitet wird, als am anderen Anschraubpunkt. Gleiches gilt für diesen zweiten Anschraubpunkt - er liegt näher an der Krafteinleitungsstelle für den den zweiten Hebel als am ersten Anschraubpunkt.

Obwohl die erfindungsgemäße Waage bevorzugt für Messprinzipien auf Basis der elektrodynamischen Kraftkompensation geschaffen ist, kann sie auch andere Messverfahren, zum Beispiel schwingende Seite, Quarz-Zelle oder Dehnungsmessstreifen nutzen. Dabei sind auch rotationssymmetrische Kraftaufnehmer denkbar.

Die Erfindung gestattet die Ausbildung einer stabilen und hoch auflösenden Präzisionswaage für unterschiedlich dimensionierte und unterschiedlich schwere Wägegüter. Insbesondere eine Waage mit zwei Brückenelementen und einteilig ausgebildetem Oberarmen gewährleistet eine große Momentenfestigkeit aufgrund einer großflächigen Lasteinleitung über diesen Oberrahmen, wobei die Festigkeit durch einen einstückig ausgebildeten Unterrahmen noch erhöht wird. Die vorzugsweise weit voneinander beabstandeten einzelnen Brückenelemente reduzieren die Ecklastempfindlichkeit der Waage und ermöglichen gleichzeitig die Verwendung großer Wägeplattformen. Die Waage ist beispielsweise gegen horizontale Lastschläge unempfindlich und zeigt eine hohe Eigenresonanzfrequenz. Eine separate Parallellenkerkonstruktion zur Führung des Lastaufnehmers (Lastaufnehmers) gegenüber dem Festland (Basisabschnitt), die im Stand der Technik nicht zur Weiterleitung oder Untersetzung der zu messenden Kraft dient, erübrigt sich vorteilhaft.

Nachfolgend soll eine Ausführungsform des erfindungsgemäßen Brückenelements und eine damit gebildete Waage anhand von Figuren näher erläutert werden. Dabei zeigt
- Fig. 1: eine perspektivische Ansicht eines Brückenelements und
- Fig.2 und 3: eine aus zwei Brückenelementen gebildete Wägebrücke.

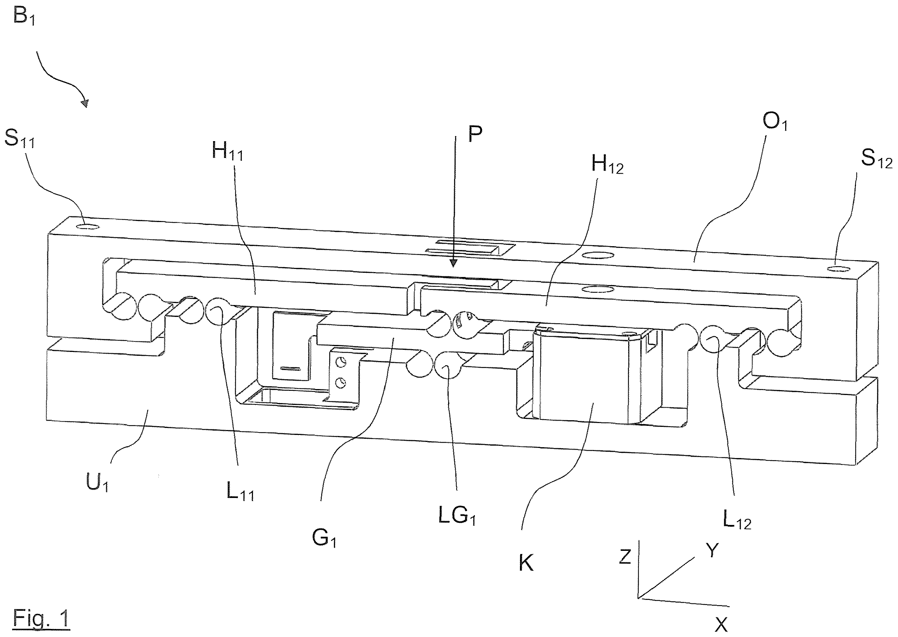

In Fig. 1 ist in perspektivischer Darstellung ein Brückenelement B₁ zu sehen, welches sich längs einer ersten Richtung X in Fig. 1 von links nach rechts erstreckt. Das Brückenelement B₁ weist einen Lastaufnehmer O₁ und einen im Wesentlichen deckungsgleich darunterliegenden Basisabschnitt U₁ auf. Der Lastaufnehmer O₁ erstreckt sich von einem ersten Ende in X-Richtung bis zu seinem zweiten Ende. Entsprechend verläuft der Basisabschnitt U₁ von einem ersten Ende in X-Richtung bis zu einem zweiten Ende. An seinem ersten Ende ist der Lastaufnehmer O₁ über einen Angriffspunkt mit einem ersten Hebel H₁₁ verbunden. An seinem zweiten Ende ist der Lastaufnehmer O₁ in vergleichbarer Weise über einen Angriffspunkt mit einem zweiten Hebel H₁₂ verbunden. Über jeweils eine Lagerstelle L₁₁ bzw L₁₂ ist jeder der beiden Hebel H₁₁ und H₁₂ gegenüber dem als ortsfest anzusehenden Basisabschnitt U₁ abgestützt.

Der Lastaufnehmer O₁ dient als Lastaufnehmer für eine Last, die vorzugsweise über einen Anschraubpunkt S₁₁ am ersten Ende und einen Anschraubpunkt S₁₂ am zweiten Ende des Lastaufnehmers O₁ in Form von gegebenenfalls unterschiedlichen Teilkräften eingeleitet werden soll.

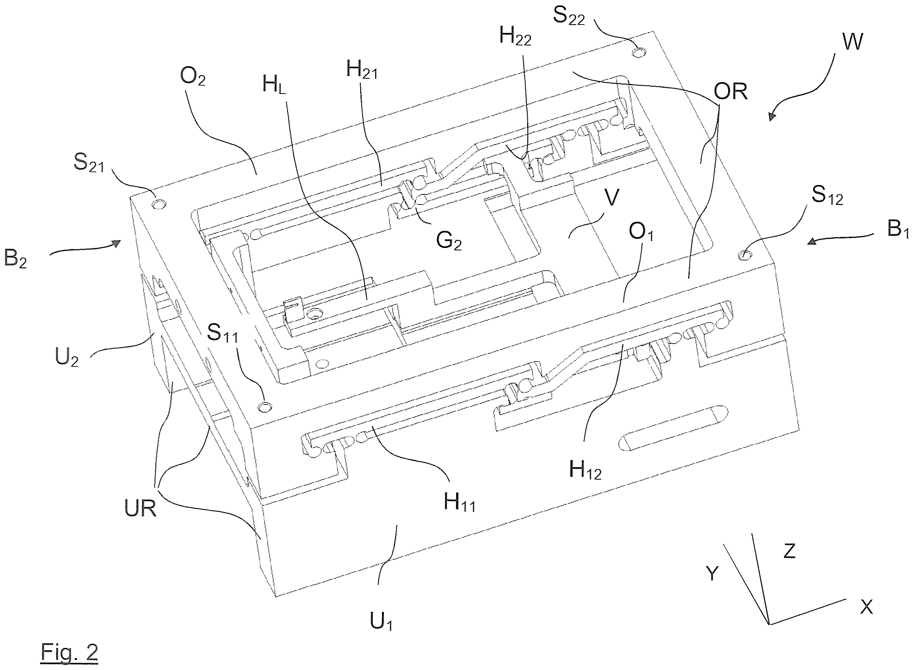

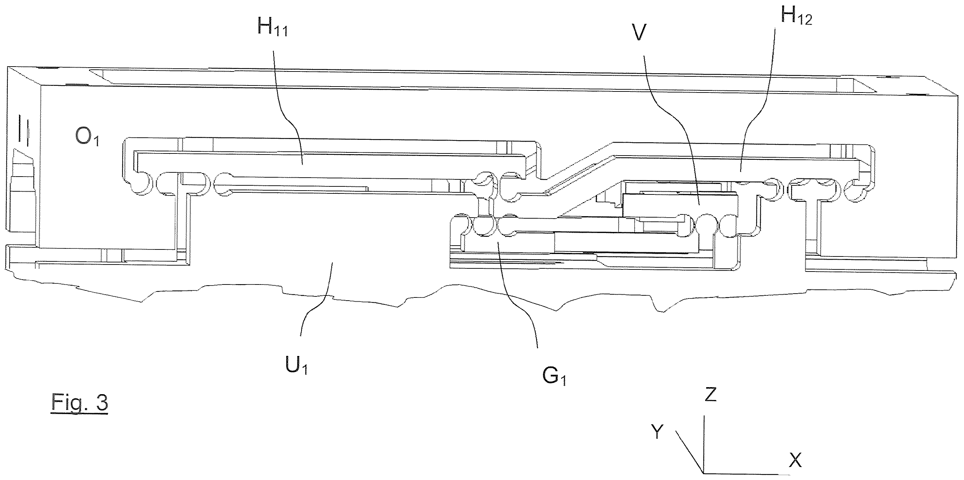

An ihren den jeweiligen Angriffspunkten abgewandten Enden, die in Fig. 1 etwa in der Mitte des Brückenelements B₁ liegen, sind die beiden Hebel H₁₁ und H₁₂ an einer Kopplungsposition P an ein Koppelglied G₁ gemeinsam angekoppelt, um die Hebelkräfte der Hebel H₁₁ und H₁₂ an dieser Stelle zu überlagern bzw. zu vereinen. Die miteinander gekoppelten Hebel H₁₁ und H₁₂ können dabei in Y-Richtung hintereinander (gemäß Fig. 1) oder auch in Z-Richtung übereinander liegend (gemäß Fig. 2 oder Fig. 3) gekoppelt werden.

Durch die Kopplung der Hebel H₁₁ und H₁₂ an der Kopplungsposition und durch geeignete Wahl der Hebellängen H₁₁ und H₁₂ (bevorzugt gleichlang) erfährt der Lastaufnehmer O₁ bei der Einleitung von vertikalen (auch unterschiedlichen) Teilkräften, die insbesondere über eine an den Anschraubpunkten S₁₁ und S₁₂ befestigte Lastschale oder Lastplatte eingeleitet werden können, eine Parallelführung entlang zweier vertikaler Parallelen in abwärts gerichtete Z-Richtung. Die kraftübertragenden bzw. kraftübersetzenden Hebel H₁₁ und H₁₂ innerhalb des Brückenelements B₁ übernehmen dabei sowohl die Übertragung und Untersetzung der aus der zu messenden Gewichtskraft resultierenden Hebelkräfte als auch die Funktion der Parallelführung.

(Das Brückenelement B₁ könnte über weitere, hier nicht dargestellte Hebel (H₁₃, H₁₄;... H₂₃, H₂₄...) verfügen, mit denen die Kräfte entweder vor oder nach einer Kopplung durch ein Koppelglied weitergeleitet werden.)

Das Koppelglied G₁ ist ebenfalls als Hebel ausgebildet und ebenso wie die Hebel H₁₁ und H₁₂ um ein am Basisabschnitt U₁ ausgebildetes Dünnstellengelenk LG₁ im oder gegen den Uhrzeigersinn schwenkbar, wobei es durch die an der Kopplungsposition gebildete Summenkraft der beiden Hebel H₁₁ und H₁₂ beaufschlagt wird. An einem ersten Ende des Koppelglieds G₁ (in Fig. 1 am rechten Ende) ist ein Teil eines Kraftaufnehmers K angeordnet, mit dem die Auslenkung des Koppelgliedes G₁ als Folge der Belastung des Lastaufnehmers O₁ kompensiert werden soll. Am gegenüberliegenden, linken Ende des Koppelglieds G₁ ist ein Element zur Positionsdetektion angeordnet, um die Auslenkung dieses Hebelarmes erfassen und signalisieren zu können.

Aus Fig. 1 ist erkennbar, dass sich die kraftübertragenden oder kraftuntersetzenden Hebel ebenso wie der Kraftaufnehmer K vollständig zwischen dem Lastaufnehmer O₁ und dem Basisabschnitt U₁ befinden, so dass das Brückenelement B₁ eine kompakte schmale Wägezelle mit Parallelführung bildet. Bemerkenswert ist dabei auch, dass durch die Einsparung der aus dem Stand der Technik bekannten Parallellenkerkonstruktion die Anzahl der Gelenke bildenden Dünnstellen auf ein Minimum reduziert werden kann. Bei dem in Fig. 1 dargestellten Fall erfordert das Brückenelement trotz Aufteilung der Gewichtskraft in zwei Teilkräfte an den beiden Enden des Lastaufnehmers O₁ und zweifacher Untersetzung (Stufe 1: Hebel H₁₁ / H₁₂, zweite Stufe: Hebelarm vom Koppelglied G₁ zum Kraftaufnehmer K) insgesamt nur sechs Dünnstellen. Durch Verzicht auf die Ausbildung des Koppelgelenks G₁ als Hebel und statt dessen durch unmittelbare Ankoppelung des Kraftaufnehmers K in vertikaler Richtung unterhalb der Kopplungsposition könnte auf eine weitere Dünnstelle verzichtet werden, was den Aufbau des Brückenelements B₁ als Wägezelle signifikant vereinfacht.

Das Koppelglied G₁ kann zugleich als Verbindungselement V ausgebildet sein, um zwei in einer Waage verwendete Brückenelemente B₁, B₂ miteinander zu verbinden, um die in jedem Brückenelement gebildete Summenkraft zu einer einzigen Kraft zusammenzuführen. Das Verbindungselement V kann jedoch auch auf einer nachgeordneten Untersetzungsstufe zur Verbindung der Brückenelemente dienen. Die nachgeschaltete Untersetzungstufe schließt sich dabei an das Koppelglied und dieses an das Verbindungselement an. Die in das Verbindungselement V eingeleitete Kraft bildet dann die Summe aus den ihrerseits nochmals untersetzten Summenkräften jedes Brückenelements. Dieser Fall ist in den Figuren 2 und 3 zu sehen.

Fig. 2 zeigt eine erfindungsgemäße Wägebrücke W unter Nutzung zweier Brückenelemente B₁, B₂. (Fig. 3 zeigt eine schematisch Seitenansicht der Fig. 2 als Ausschnitt). Ein im Vordergrund dargestelltes erstes Brückenelement B₁ ist mit einem hinteren weiteren Brückenelement B₂ einstückig ausgebildet, in dem die jeweiligen Lastaufnehmer O₁, O₂ und die Basisabschnitte U₁, U₂ jeweils gemeinsam zu einem einstückigen Unterrahmen UR bzw. Oberrahmen OR zusammengeführt sind. An dem Oberrahmen OR vorgesehene Anschraubpunkte S₁₁ S₁₂, S₂₁, S₂₂ eines jeden Lastaufnehmers O₁, O₂ gestatten die Verbindung einer Lastplatte bzw. Waagschale, auf die das zu wiegende Gut aufzulegen ist.

Analog zur Einzeldarstellung gemäß Fig. 1 sind die jeweiligen Hebel H₁₁, H₁₂; H₂₁, H₂₂ eines jeden Brückenelements wieder zur Bildung einer Summenkraft an einer Kopplungsposition miteinander gekoppelt, wobei die separaten Koppelglieder G₁, G₂ (G₁ ist in Fig. 2 schlecht zu sehen und nicht bezeichnet) hier für jedes Brückenelement als Hebel ausgeführt sind, die am linken Ende am Unterrahmen UR als Schwenkachse abgestützt sind und sich im Wesentlichen nach rechts in X-Richtung erstrecken.

Im rechten Abschnitt der Wägebrücke W greift jeder der beiden Hebel der Koppelglieder G₁, G₂ an einem die beiden Brückenelemente B₁, B₂ miteinander verbindenden Verbindungselement V an, wodurch die in jedem Brückenelement gebildeten Summenkräfte bzw. deren durch die Hebel G₁, G₂ weiter untersetzten Kräfte gemeinsam in das Verbindungselement V eingeleitet werden. Auch dieses Verbindungselement V ist als Hebel ausgebildet, der an seinem rechten Ende über eine als Schwenkachse dienende Lagerstelle am Unterrahmen UR abgestützt ist. Das Verbindungselement V ist zugleich der letzte Hebel H_{L}, der einer Untersetzung dient. Er führt nun die von den Brückenelementen separat gebildeten Kräfte zusammen und erstreckt sich im Bereich zwischen den beiden gegenüberliegenden Brückenelementen um ein Maß in X-Richtung entgegen den beiden Koppelgliedern G₁, G₂ (in Fig. 2 und 3 nach links). Dort greift der letzte Hebel H_{L} an einem nicht näher dargestellten Kraftaufnehmer bzw. einer Komponente eines Kraftkompensationssystems an.

Anders als bei dem in Fig. 1 einzeln dargestellten Brückenelement B₁ haben die beiden gemeinsam ausgebildeten Brückenelemente der Wägebrücke gemäß Fig. 2 und Fig. 3 keinen jedem Brückenelement zugeordneten eigenen Kraftaufnehmer K. Da die Wägebrücke die Kräfte der einzelnen Brückenelemente erst zusammenführt mittels des Verbindungselements V und sich dieses Verbindungselement V in Y-Richtung quer zu den beiden Brückenelementen erstreckt, ist hier der Kraftaufnehmer zweckmäßigerweise im Inneren der Wägebrücke, also zwischen den beiden Brückenelementen, angeordnet. Der restliche freigehaltene Bauraum kann zur Aufnahme von anderen Waagenkomponenten, Kalibrierauflagen und -gewichten, elektronischen Bauteilen, Vibrations- und Beschleunigungssensoren, eines Motor eines Transportsystems, etc. genutzt werden.

Ferner unterscheiden sich die ersten beiden Hebel des Brückenelements aus Fig. 1 von denjenigen aus Fig. 2 und 3, da letztere einen geraden Hebel H₁₁ bzw. H₂₁ mit einem gebogenen bzw. gewinkelten Hebel H₁₂ bzw. H₂₂ kombinieren bzw. koppeln.

### Bezugszeichenliste

- Bᵢ: Brückenelement mit Index i
- Gᵢ: Koppelglied des Brückenelements i
- Hᵢⱼ: Hebel j des Brückenelements i
- H_{L}: letzter Hebel
- K: Kraftaufnehmer
- Lᵢⱼ: Lagerstelle des Hebels j am Brückenelement i
- Oᵢ: Lastaufnehmer des Brückenelements i
- OR: Oberrahmen
- P: Kopplungsposition
- Sᵢⱼ: Anschraubpunkte j des Lastaufnehmers i
- Ui: Basisabschnitt des Brückenelements i
- UR: Unterrahmen
- V: Verbindungselement
- W: Wägebrücke
- X, Y, Z: Richtungen im Raum

## Patentansprüche

1. Wägebrücke (W), insbesondere für eine Präzisionswaage, umfassend wenigstens zwei sich längs einer ersten Richtung (X) erstreckende Brückenelemente (B₁, B₂, ...),
a) wobei kraftübertragende Hebel separat für jedes Brückenelement vorgesehen sind, um damit innerhalb des Brückenelements eine Gewichtskraft zu untersetzen und/oder in Richtung auf einen Kraftaufnehmer (K) der Wägebrücke weiterzuleiten,
b) wobei jedes Brückenelement (B₁, B₂) einen Lastaufnehmer (O₁, O₂) zur Aufnahme einer Teilgewichtskraft und einen Basisabschnitt (U₁, U₂) zur Abstützung der im Brückenelement vorgesehenen Hebel (H₁₁, H₁₂, H₁₃, H₁₄; H₂₁, H₂₂, H₂₃, H₂₄) aufweist,
c) wobei jeder Lastaufnehmer (O₁, O₂) gleichzeitig an einem ersten Hebel (H₁₁, H₂₁) des jeweiligen Brückenelements und an einem vom ersten Hebel (H₁₁, H₂₁) verschiedenen zweiten Hebel (H₁₂, H₂₂) desselben Brückenelements angreift,
d) wobei in jedem Brückenelement die ersten beiden Hebel (H₁₁, H₁₂; H₂₁, H₂₂) oder jeweils daran gekoppelte weitere Hebel (H₁₃, H₁₄..._{;} H₂₃, H₂₄...) zur Bildung einer dem jeweiligen Brückenelement (B₁, B₂) zugehörigen Summenkraft (S₁, S₂) an einem gemeinsamen Koppelglied (G) zu einem Hebelpaar miteinander gekoppelt sind, und
e) wobei die in jedem Brückenelement (B₁, B₂) gebildeten Summenkräfte (S₁, S₂) gemeinsam in ein wenigstens zwei Brückenelementen (B₁, B₂) gleichzeitig dienendes Verbindungselement (V) eingeleitet werden, um von dort unmittelbar oder untersetzt dem Kraftaufnehmer zugeführt zu werden.,
**dadurch gekennzeichnet,**
f) **dass** jedes Brückenelement eine eigene Parallelführung für den Lastaufnehmer aufweist, indem der Lastaufnehmer (O₁, O₂) jedes Brückenelements (B₁, B₂) relativ zum jeweiligen Basisabschnitt (U₁, U₂) durch die an den jeweiligen Lastaufnehmer (O₁, O₂) gekoppelten Hebel (H₁₁, H₁₂; H₂₁, H₂₂) entlang von Parallelen in einer vertikalen dritten Richtung (Z) geführt wird (Parallelführung), wobei die vertikale dritte Richtung (Z) zur ersten Richtung (X) und einer zur ersten Richtung (X) senkrechten, horizontalen zweiten Richtung (Y) senkrecht verläuft.

2. Wägebrücke (W) nach Anspruch 1, **dadurch gekennzeichnet, dass** die Hebelpaare der wenigstens zwei Brückenelemente (B₁, B₂) einander auf beiden Seiten einer die Wägebrücke mittig teilenden, vertikalen Ebene, welche sich in der ersten und dritten Richtung aufspannt (X-Z), symmetrisch gegenüber liegen.

3. Wägebrücke (W) nach Anspruch 1, **dadurch gekennzeichnet, dass** sich das Verbindungselement (V) in einer zur ersten Richtung (X) senkrechten, horizontalen zweiten Richtung (Y) und damit quer zu den Haupterstreckungsrichtungen (X) der Brückenelemente erstreckt, um so ein Brückenelement (B₁) mit dem dazu beabstandeten anderen Brückenelement (B₂) zu koppeln.

4. Wägebrücke (W) nach einem der vorigen Ansprüche, **dadurch gekennzeichnet, dass** das Koppelglied (G) eines Brückenelements (B₁, B₂) ein weiterer Hebel des Brückenelements oder ein Verbindungselement (V) ist.

5. Wägebrücke (W) nach einem der vorigen Ansprüche, **dadurch gekennzeichnet, dass** die jeweils zu einem Hebelpaar miteinander gekoppelten Hebel gegenläufig drehen.

6. Wägebrücke (W) nach einem der vorigen Ansprüche, **dadurch gekennzeichnet, dass** sich die Lastaufnehmer (O₁, O₂) und die Basisabschnitte (U₁, U₂) im Wesentlichen entlang einer ersten Richtung (X) erstrecken und dabei in einer zur ersten Richtung (X) und einer horizontalen zweiten Richtung (Y) vertikalen dritten Richtung (Z) im Wesentlichen übereinander liegen.

7. Wägebrücke (W) nach einem der vorigen Ansprüche, **dadurch gekennzeichnet, dass** die Brückenelemente (B₁, B₂) einander in einer zur ersten Richtung (X) senkrechten, horizontalen zweiten Richtung (Y) beabstandet gegenüberliegen, um dazwischenliegenden Bauraum für weitere Komponenten einer Waage freizuhalten.

8. Wägebrücke (W) nach einem der vorigen Ansprüche, **dadurch gekennzeichnet, dass**
a) die Lastaufnehmer (O₁, O₂) der einzelnen Brückenelemente (B₁, B₂) zur Ausbildung eines gemeinsamen Lastrahmens (OR) und/oder
b) die Basisabschnitte (U₁, U₂) der einzelnen Brückenelemente (B₁, B₂) zur Ausbildung eines gemeinsamen, vorzugsweise ortsfesten, Basisrahmens (UR)
miteinander verbunden oder einstückig miteinander ausgebildet sind.

9. Wägebrücke (W) nach dem vorhergehenden Anspruch, **dadurch gekennzeichnet, dass** der Lastrahmen (OR) in der Draufsicht rechteckige Form hat und in seinen Eckbereichen jeweils einen Anschraubpunkt (S₁₁, S₁₂; S₂₁, S₂₂) aufweist, um über diese Anschraubpunkte eine die Wägebrücke insgesamt beaufschlagende Gewichtskraft aufteilend in den Lastrahmen (OR) einzuleiten.

10. Wägebrücke (W) nach dem vorhergehenden Anspruch, **dadurch gekennzeichnet, dass** der Kraftaufnehmer (K) in der zur ersten Richtung (X) senkrechten, horizontalen zweiten Richtung (Y) seitlich zwischen den Brückenelementen angeordnet ist.

11. Gravimetrische Waage mit wenigstens einer Wägebrücke (W) nach einem der vorigen Ansprüche.

## Claims

1. Weighbridge (W), in particular for a precision balance, comprising at least two bridge elements (B₁, B₂, ...) extending along a first direction (X)
a) wherein force-transmitting levers are provided separately for each bridge element in order to reduce a weight force within the bridge element and/or to transmit it in the direction of a force transducer (K) of the weighbridge,
b) wherein each bridge element (B₁, B₂) has a load receiver (O₁, O₂) for receiving a partial weight force and a base section (U₁, U₂) for supporting the levers (H₁₁, H₁₂, H₁₃, H₁₄; H₂₁, H₂₂, H₂₃, H₂₄) provided in the bridge element,
c) wherein each load receiver (O₁, O₂) simultaneously engages a first lever (H₁₁, H₂₁) of the respective bridge element and a second lever (H₁₂, H₂₂) of the same bridge element different from the first lever (H₁₁, H₂₁),
d) wherein in each bridge element, the first two levers (H₁₁, H₁₂; H₂₁, H₂₂) or further levers (H₁₃, H₁₄...; H₂₃, H₂₄...) respectively coupled thereto are coupled to one another at a common coupling member (G) to form a lever pair for forming a sum force (S₁, S₂) associated with the respective bridge element (B₁, B₂), and
e) wherein the sum forces (S₁, S₂) formed in each bridge element (B₁, B₂) are jointly introduced into a connecting element (V) serving at least two bridge elements (B₁, B₂) simultaneously, in order to be supplied from there directly or in a reduced manner to the force transducer,
**characterized in that**
f) each bridge element has its own parallel guide for the load receiver, **in that** the load receiver (O₁, O₂) of each bridge element (B₁, B₂) is guided relative to the respective base section (U₁, U₂) by the levers (H₁₁, H₁₂; H₂₁, H₂₂) coupled to the respective load receiver (O₁, O₂) along parallels in a vertical third direction (Z) (parallel guidance), wherein the vertical third direction (Z) is perpendicular to the first direction (X) and a horizontal second direction (Y) perpendicular to the first direction (X).

2. Weighbridge (W) according to claim 1, **characterized in that** the pairs of levers of the at least two bridge elements (B₁, B₂) are symmetrically opposed to each other on both sides of a vertical plane centrally dividing the weighbridge and extending (X-Z) in the first and third directions.

3. Weighbridge (W) according to claim 1, **characterized in that** the connecting element (V) extends in a horizontal second direction (Y) perpendicular to the first direction (X) and thus transversely to the main directions of extension (X) of the bridge elements, so as to couple one bridge element (B₁) to the other bridge element (B₂) which is spaced therefrom.

4. Weighbridge (W) according to one of the preceding claims, **characterized in that** the coupling member (G) of a bridge element (B₁, B₂) is a further lever of the bridge element or a connecting element (V).

5. Weighbridge (W) according to one of the preceding claims, **characterized in that** the levers coupled together to form a pair of levers each rotate in opposite directions.

6. Weighbridge (W) according to one of the preceding claims, **characterized in that** the load receivers (O₁, O₂) and the base sections (U₁, U₂) extend substantially along a first direction (X) and are substantially superimposed in a third direction (Z) vertical to the first direction (X) and a horizontal second direction (Y).

7. Weighbridge (W) according to one of the preceding claims, **characterized in that** the bridge elements (B₁, B₂) lie opposite one another at a distance in a horizontal second direction (Y) perpendicular to the first direction (X) in order to keep free intermediate installation space for further components of a balance.

8. Weighbridge (W) according to one of the preceding claims, **characterized in that**
a) the load receivers (O₁, O₂) of the individual bridge elements (B₁, B₂) are connected to each other or integrally formed with each other to form a common load frame (OR) and/or
b) the base sections (U₁, U₂) of the individual bridge elements (B₁, B₂) are connected to each other or integrally formed with each other to form a common, preferably stationary, base frame (UR).

9. Weighbridge (W) according to the preceding claim, **characterized in that** the load frame (OR) has a rectangular shape in plan view and has a screw-on point (S₁₁, S₁₂; S₂₁, S₂₂) in each of its corner regions in order to introduce a weight force acting on the weighbridge as a whole via these screw-on points into the load frame (OR) in a dividing manner.

10. Weighbridge (W) according to the preceding claim, **characterized in that** the force transducer (K) is arranged laterally between the bridge elements in the horizontal second direction (Y) perpendicular to the first direction (X).

11. Gravimetric balance having at least one weighbridge (W) according to one of the preceding claims.

## Revendications

1. Pont de pesage (W), notamment pour une balance de précision, comprenant au moins deux éléments de pont (B₁, B₂,...) s'étendant dans une première direction (X),
a) dans lequel des leviers de transmission de force sont prévus séparément pour chaque élément de pont afin de réduire un poids à l'intérieur de l'élément de pont et/ou de le transmettre en direction d'un récepteur de force (K) du pont de pesage,
b) dans lequel chaque élément de pont (B₁, B₂) présente un récepteur de charge (O₁, O₂) destiné à recevoir un poids partiel et une section de base (U₁, U₂) pour soutenir les leviers (H₁₁, H₁₂, H₁₃, H₁₄ ; H₂₁, H₂₂, H₂₃, H₂₄) prévus dans l'élément de pont,
c) dans lequel chaque récepteur de charge (O₁, O₂) vient en prise simultanément avec un premier levier (H₁₁, H₂₁) de l'élément de pont respectif et avec un second levier (H₁₂, H₂₂) différent du premier levier (H₁₁, H₂₁) du même élément de pont,
d) dans lequel, dans chaque élément de pont, les deux premiers leviers (H₁₁, H₁₂ ; H₂₁, H₂₂) ou d'autres leviers couplés à chacun d'eux (H₁₃, H₁₄... ; H₂₃, H₂₄...) sont couplés l'un à l'autre pour former une paire de leviers au niveau d'un élément d'accouplement commun (G) afin de former une force totale (S₁, S₂) associée à l'élément de pont (B₁, B₂), et
e) dans lequel les forces totales (S₁, S₂) formées dans chaque élément de pont (B₁, B₂) sont appliquées ensemble dans un élément de liaison (V) servant simultanément à au moins deux éléments de pont (B₁, B₂), pour être transmises au récepteur de force directement à partir de là ou après réduction,
**caractérisé en ce**
f) **que** chaque élément de pont présente son propre guidage parallèle pour le récepteur de charge par le guidage du récepteur de charge (O₁, O₂) de chaque élément de pont (B₁, B₂) par rapport à la section de base respective (U₁, U₂) au moyen du levier (H₁₁, H₁₂ ; H₂₁, H₂₂) couplé au récepteur de charge respectif (O₁, O₂) le long de lignes parallèles dans une troisième direction verticale (Z) (guidage parallèle), la troisième direction verticale (Z) étant perpendiculaire à la première direction (X) et à une seconde direction horizontale (Y) perpendiculaire à la première direction (X).

2. Pont de pesage (W) selon la revendication 1, **caractérisé en ce que** les paires de leviers des au moins deux éléments de pont (B₁, B₂) se trouvent symétriquement opposées l'une par rapport à l'autre de part et d'autre d'un plan vertical divisant le pont de pesage au milieu et qui s'étend dans les première et troisième directions (X-Z).

3. Pont de pesage (W) selon la revendication 1, **caractérisé en ce que** l'élément de liaison (V) s'étend dans une seconde direction horizontale (Y) perpendiculaire à la première direction (X) et donc transversale aux directions principales d'extension (X) des éléments de pont, de manière à coupler un élément de pont (B₁) avec l'autre élément de pont (B₂) espacé de celui-ci.

4. Pont de pesage (W) selon l'une des revendications précédentes, **caractérisé en ce que** l'élément d'accouplement (G) d'un élément de pont (B₁, B₂) est un autre levier de l'élément de pont ou un élément de liaison (V).

5. Pont de pesage (W) selon l'une des revendications précédentes, **caractérisé en ce que** les leviers couplés l'un à l'autre pour former une paire de leviers tournent dans des directions opposées.

6. Pont de pesage (W) selon l'une des revendications précédentes, **caractérisé en ce que** les récepteurs de charge (O₁, O₂) et les sections de base (U₁, U₂) s'étendent sensiblement dans une première direction (X) et sont ainsi sensiblement l'un au-dessus de l'autre dans une troisième direction (Z) qui est verticale par rapport à la première direction (X) et à une seconde direction horizontale (Y).

7. Pont de pesage (W) selon l'une des revendications précédentes, **caractérisé en ce que** les éléments de pont (B₁, B₂) sont opposés l'un par rapport à l'autre de manière espacée dans une seconde direction horizontale (Y) perpendiculaire à la première direction (X) afin de maintenir l'espace de montage se trouvant entre eux libre pour d'autres composants d'une balance.

8. Pont de pesage (W) selon l'une des revendications précédentes, **caractérisé en ce que**
a) les récepteurs de charge (O₁, O₂) des éléments de pont individuels (B₁, B₂) sont reliés l'un à l'autre ou sont formés ensemble d'un seul tenant, de façon à former un cadre de charge commun (OR) et/ou
b) les sections de base (U₁, U₂) des éléments de pont individuels (B₁, B₂) sont reliées l'une à l'autre ou sont formées ensemble d'un seul tenant, de façon à former un cadre de base (UR) commun, de préférence fixe.

9. Pont de pesage (W) selon la revendication précédente, **caractérisé en ce que** le cadre de charge (OR) a une forme rectangulaire en vue de dessus et présente un point de vissage (S₁₁, S₁₂ ; S₂₁, S₂₂) dans ses zones d'angle, pour appliquer de façon divisée un poids sollicitant globalement le pont de pesage dans le cadre de charge (OR) par l'intermédiaire de ces points de vissage.

10. Pont de pesage (W) selon la revendication précédente, **caractérisé en ce que** le récepteur de force (K) est disposé latéralement entre les éléments de pont dans la seconde direction horizontale (Y) perpendiculaire à la première direction (X).

11. Balance gravimétrique comprenant au moins un pont de pesage (W) selon l'une des revendications précédentes.
